# EUROPEAN PATENT APPLICATION

(11) **EP 4 462 547 A1**
(43) Date of publication of application: **13.11.2024**
(21) Application number: 23742755.4
(22) Date of filing: 10.01.2023
(51) Int. Cl.: H01M 10/0587, H01M 10/0583

(54) **ELECTRODE ASSEMBLY, WINDING APPARATUS AND METHOD, BATTERY CELL, BATTERY, AND ELECTRICAL DEVICE**

(30) Priority: 21.01.2022 CN 202210073353
(71) Applicant: Contemporary Amperex Technology Co., Limited, Fujian 352100 (CN)
(72) Inventor: GUO, Suogang, Ningde City, Fujian 352100 (CN); YANG, Guozhong, Ningde City, Fujian 352100 (CN); FU, Chenghua, Ningde City, Fujian 352100 (CN); ZHANG, Chenchen, Ningde City, Fujian 352100 (CN); YE, Yonghuang, Ningde City, Fujian 352100 (CN)
(74) Representative: Gong, Jinping
(86) International application number: PCT/CN2023/071588
(87) International publication number: WO 2023/138440

(57) **Abstract**

This application relates to an electrode assembly, a winding device and method, a battery cell, a battery, and an electric apparatus, and pertains to the field of battery manufacturing technologies. This application proposes an electrode assembly including a positive electrode plate, where a bending region is formed after the positive electrode plate is wound; and the positive electrode plate includes a positive electrode current collector and a positive electrode active substance layer disposed on a surface of the positive electrode current collector, where the positive electrode active substance layer includes an inactive region, and at least part of the inactive region is located in the bending region. This application further proposes a winding device and a manufacturing method of electrode assembly, so as to shape the electrode assembly. The electrode assembly has good safety performance, and the manufacturing method and winding device can be used for winding the electrode assembly, so that industrialized production of the electrode assembly can be realized, improving the manufacturing efficiency of the electrode assembly. This application further proposes a battery cell, a battery, and an electric apparatus that include the electrode assembly.

## Description

### CROSS-REFERENCE TO RELATED APPLICATIONS

This application claims priority to Chinese patent application No. 202210073353.9, filed on January 21, 2022 and entitled "ELECTRODE ASSEMBLY, WINDING DEVICE AND METHOD, BATTERY CELL, BATTERY, AND ELECTRIC APPARATUS", which is incorporated herein by reference in its entirety.

### TECHNICAL FIELD

This application relates to the field of battery manufacturing technologies, and specifically, to an electrode assembly, a winding device and method, a battery cell, a battery, and an electric apparatus.

### BACKGROUND

With the rapid development of new energy automobile industry, the technical level of traction batteries is becoming increasingly mature, and safety performance of traction batteries has become one of the important indicators for measuring their performance. The wound electrode assembly is an important component in a battery cell, and the safety performance of the electrode assembly plays a decisive role in the safety performance of the battery cell. However, the existing electrode assembly is prone to lithium precipitation during charging, and its safety performance is poor. In addition, even if the structure of the electrode assembly is improved to improve the safety performance of the battery cell, no corresponding winding device is available currently, making it impossible to realize industrialized production of such electrode assembly.

### SUMMARY

In view of this, this application provides an electrode assembly, a winding device and method, a battery cell, a battery, and an electric apparatus. The electrode assembly has good safety performance, and the manufacturing method and winding device can be used for winding the electrode assembly, so that industrialized production of the electrode assembly can be realized, improving the manufacturing efficiency of the electrode assembly.

An embodiment of a first aspect of this application proposes an electrode assembly including a positive electrode plate, where a bending region is formed after the positive electrode plate is wound; and the positive electrode plate includes a positive electrode current collector and a positive electrode active substance layer disposed on a surface of the positive electrode current collector, where the positive electrode active substance layer includes an inactive region, and at least part of the inactive region is located in the bending region.

In the electrode assembly of the embodiment of this application, since at least part of the inactive region of the positive electrode active substance layer is located in the bending region of the positive electrode plate, effective active area of the positive electrode active substance layer in the bending region of the positive electrode plate can be reduced, thereby increasing the CB value (that is, a ratio of a negative electrode active substance capacity to a positive electrode active substance capacity on the directly opposite side) of the bending part of the electrode assembly. This allows the lithium ions deintercalated from the positive electrode active substance layer during the charging process of the battery cell to be effectively intercalated into the corresponding negative electrode active substance layer, alleviating the phenomenon of lithium precipitation at the bending part of the electrode assembly, thereby improving safety performance of the electrode assembly.

According to some embodiments of this application, the positive electrode current collector includes an inner side surface facing an axis of the electrode assembly and an outer side surface facing away from the axis of the electrode assembly, and the positive electrode active substance layer includes a first positive electrode active substance layer disposed on the inner side surface of the positive electrode current collector and a second positive electrode active substance layer disposed on the outer side surface of the positive electrode current collector, the first positive electrode active substance layer including the inactive region.

In the foregoing solution, since area of the first positive electrode active substance layer disposed on the inner side surface of the positive electrode current collector is larger than area of the negative electrode active substance layer of the corresponding negative electrode current collector, arranging the inactive region on the first positive electrode active substance layer can reduce the effective active area of the first positive electrode active substance layer and increase the CB value between the outer side of the negative electrode plate and the inner side of the positive electrode plate in the bending part of the electrode assembly. This allows most of the lithium ions deintercalated from the first positive electrode active substance layer during the charging process of the battery cell to be intercalated into the corresponding negative electrode active substance layer, alleviating the phenomenon of lithium precipitation between the inner side surface of the positive electrode current collector and the negative electrode current collector on the inner side, thereby improving the safety performance of the electrode assembly.

According to some embodiments of this application, the inactive region is located at the innermost turn of the positive electrode plate of the electrode assembly.

In the foregoing solution, the radius of curvature of the innermost turn of the positive electrode plate is the smallest, resulting in the largest area ratio between the positive electrode active substance layer on the inner side surface of the innermost turn of the positive electrode plate and the negative electrode active substance layer on the inner turn of the corresponding negative electrode plate. Arranging the inactive region on the innermost turn of the positive electrode plate can obviously increase the CB value between the inner side of the innermost turn of the positive electrode plate and the negative electrode plate on its inner side, so that the lithium ions deintercalated from the positive electrode active substance layer during the charging process of the battery cell can be effectively intercalated into the corresponding negative electrode active substance layer, alleviating the lithium precipitation phenomenon and improving the safety performance of the electrode assembly.

According to some embodiments of this application, the inactive region is provided in a quantity of at least two, and the at least two inactive regions are spaced apart in a winding direction.

In the foregoing solution, each turn of the positive electrode plate includes two bending regions along the winding direction, and each bending region is provided with one inactive region, thereby alleviating the lithium precipitation phenomenon at the bending part of the electrode assembly and improving the safety performance of the electrode assembly.

An embodiment of a second aspect of this application proposes a battery cell including the electrode assembly according to the embodiments of the first aspect of this application.

Since the bending region of the positive electrode plate in the electrode assembly of the embodiments of the first aspect of this application has the inactive region, the lithium precipitation phenomenon at the bending part of the electrode assembly can be alleviated, and the safety performance of the electrode assembly can be improved, so that the battery cell including the electrode assembly also has good safety performance.

An embodiment of a third aspect of this application proposes a battery including the battery cell according to the embodiment of the second aspect of this application.

Since the bending region of the positive electrode plate in the electrode assembly used by the battery cell of the embodiment of the second aspect of this application has the inactive region, the lithium precipitation phenomenon at the bending part of the electrode assembly can be alleviated, and the battery cell has good safety performance, so that the battery including such battery cell also has good safety performance.

An embodiment of a fourth aspect of this application proposes an electric apparatus including the battery according to the embodiment of the third aspect of this application, where the battery is configured to supply electric energy.

Since the bending region of the positive electrode plate in the electrode assembly used by the battery cell in the battery of the embodiment of the third aspect of this application has the inactive region, the lithium precipitation phenomenon at the bending part of the electrode assembly can be alleviated, and the battery cell has good safety performance, so that the electric apparatus including such battery also has good safety performance.

An embodiment of a fifth aspect of this application proposes a winding device including: a winding apparatus configured to wind a positive electrode plate; and an inactivation apparatus, where the inactivation apparatus is disposed upstream of the winding apparatus along a conveying direction of the positive electrode plate, and the inactivation apparatus is configured to provide an inactivating agent to the positive electrode plate to inactivate a positive electrode active substance at part of the positive electrode active substance layer of the positive electrode plate.

In the winding device of the embodiment of this application, the inactivation apparatus can provide the inactivating agent to the positive electrode plate to inactivate the positive electrode active substance at part of the positive electrode active substance layer of the positive electrode plate to form an inactive region, so that the positive electrode plate wound by the winding device during winding of the electrode assembly has an inactive region. In this way, the electrode assembly in the embodiment of the first aspect of this application can be formed, and industrialized production of such electrode assembly can be realized, improving the shaping efficiency of such electrode assembly.

According to some embodiments of this application, the inactivation apparatus is configured to provide the inactivating agent to a side of the positive electrode plate facing the winding apparatus.

In the foregoing solution, the inactivation apparatus provides an inactivating agent to the side of the positive electrode plate facing the winding apparatus, so that after the positive electrode plate enters the winding apparatus, its inner side facing the winding apparatus is located on a side facing the winding axis, making the inactive region located at the first positive electrode active substance layer on the inner side surface of the positive electrode current collector. This can increase the CB value between the outer side of the negative electrode plate and the inner side of the positive electrode plate, and alleviate the lithium precipitation phenomenon between the inner side surface of the positive electrode current collector and the negative electrode current collector of the negative electrode plate on its inner side, thereby improving the safety performance of the electrode assembly.

According to some embodiments of the application, the inactivation apparatus includes: a clamping mechanism configured to clamp the positive electrode plate and provide the inactivating agent to the positive electrode plate; and a driving mechanism configured to drive the clamping mechanism to move synchronously with the positive electrode plate.

In the foregoing solution, the driving mechanism drives the clamping mechanism to move synchronously with the positive electrode plate, and the inactivating agent can be continuously provided to the positive electrode plate within the time range when the clamping mechanism moves with the positive electrode plate, ensuring the inactivation effect on the positive electrode active substance layer of the positive electrode plate and formation of the effective inactive region.

According to some embodiments of this application, the clamping mechanism includes a bracket; a first clamping portion and a second clamping portion disposed on the bracket; and a first driving member disposed on the bracket and configured to drive the first clamping portion and the second clamping portion to approach or move away from each other, so as to clamp or release the positive electrode plate; where at least one of the first clamping portion and the second clamping portion is configured to provide the inactivating agent to the positive electrode plate.

In the foregoing solution, the first clamping portion and the second clamping portion jointly clamp the positive electrode plate and provide the inactivating agent to the positive electrode plate, so that the position accuracy of the inactive region can be improved and an effective inactive region can be formed at the preset position of the positive electrode plate.

According to some embodiments of this application, at least one of the first clamping portion and the second clamping portion is made of a porous material.

In the foregoing solution, the porous material can store the inactivating agent. When the first clamping portion and the second clamping portion jointly clamp the positive electrode plate, the porous material can be squeezed to extrude the inactivating agent from the porous material to the surface of the positive electrode plate; and when the positive electrode plate is released, the residual inactivating agent on the surface of the positive electrode plate can be sucked back. This not only keeps the surface of the positive electrode plate clean, but also implements recycling of the inactivating agent.

According to some embodiments of this application, the driving mechanism includes: a lead screw disposed along the conveying direction of the positive electrode plate, where the lead screw runs through the bracket and is in threaded fit with the bracket; and a second driving member configured to drive the lead screw to rotate so that the bracket moves along an axial direction of the lead screw.

In the foregoing solution, rotation of the lead screw can drive the bracket to rotate along the axial direction of the lead screw, and further drive the clamping mechanism to move synchronously with the positive electrode plate. The structure is simple and easy to assemble.

According to some embodiments of this application, the inactivation apparatus includes at least two clamping mechanisms spaced apart in the conveying direction of the positive electrode plate, and the driving mechanism is configured to drive the at least two clamping mechanisms to move synchronously.

In the foregoing solution, each clamping mechanism corresponds to one inactive region, and the driving mechanism drives the at least two clamping mechanisms to move synchronously, so that the at least two clamping mechanisms can jointly clamp the positive electrode plate and move along with the positive electrode plate, so as to form at least two inactive regions, improving the formation efficiency of the inactive regions.

According to some embodiments of this application, the inactivation apparatus further includes: a detection mechanism configured to detect position information of the positive electrode plate; and a controller configured to control actions of the clamping mechanism and the driving mechanism based on the position information detected by the detection mechanism.

In the foregoing solution, through provision of the detection mechanism, the position information of the positive electrode plate can be detected, so that the controller can determine the preset position of the inactive region of the positive electrode plate, control the clamping mechanism to accurately perform the clamping action, and control the driving mechanism to drive the clamping mechanism to move synchronously with the positive electrode plate. This can improve the position accuracy of the inactive region, so as to form an effective inactive region at the preset position of the positive electrode plate.

An embodiment of a sixth aspect of this application provides a manufacturing method of electrode assembly, including:
providing a positive electrode plate;
inactivating part of a positive electrode active substance layer of the positive electrode plate; and
winding the positive electrode plate.

With the manufacturing method of electrode assembly in the embodiment of this application, an electrode assembly can be manufactured, with at least part of an inactive region of a positive electrode plate of the electrode assembly located in a bending region, thereby alleviating the lithium precipitation phenomenon at the bending part of the electrode assembly, and delivering good safety performance.

According to some embodiments of this application, the deactivating part of a positive electrode active substance layer of the positive electrode plate includes: providing an acidic solution to the positive electrode plate to inactivate part of the positive electrode active substance layer of the positive electrode plate.

In the foregoing solution, the acidic solution is provided to the positive electrode plate to inactivate part of the positive electrode active substance layer through acid-base neutralization. This allows for easy and efficient formation of inactive regions, and also maintains the original shape of the positive electrode active substance layer and keeps the surface of the positive electrode active substance layer flat, further alleviating the lithium precipitation phenomenon at the bending part of the electrode assembly while ensuring the working performance of components of the battery.

For additional aspects and advantages of this application, some will be given in the following description, and some will become apparent in the following description or will be understood in the practice of this application.

### BRIEF DESCRIPTION OF DRAWINGS

To describe the technical solutions of the embodiments of this application more clearly, the following briefly describes the accompanying drawings required for describing the embodiments. It should be understood that the accompanying drawings below show merely some embodiments of this application and thus should not be considered as limitations on the scope. Persons of ordinary skill in the art may still derive other related drawings from the accompanying drawings without creative efforts.
FIG. 1 is a simple schematic diagram of a vehicle according to an embodiment of this application;
FIG. 2 is a schematic structural diagram of a battery of the vehicle in FIG. 1;
FIG. 3 is a schematic structural diagram of a battery cell in the battery of FIG. 2;
FIG. 4 is a structural diagram of one form of electrode assembly according to some embodiments of this application;
FIG. 5 is a partially enlarged view of position A in FIG. 4;
FIG. 6 is a structural diagram of another form of electrode assembly according to some embodiments of this application;
FIG. 7 is a schematic diagram of winding of a positive electrode plate and a negative electrode plate in an electrode assembly according to some embodiments of this application;
FIG. 8 is a schematic diagram of winding of a positive electrode plate in an electrode assembly according to some embodiments of this application;
FIG. 9 is a schematic structural diagram of still another form of positive electrode plate in an electrode assembly according to some embodiments of this application;
FIG. 10 is a schematic structural diagram of yet another positive electrode plate in an electrode assembly according to some embodiments of this application;
FIG. 11 is a schematic structural diagram of yet another positive electrode plate in an electrode assembly according to some embodiments of this application;
FIG. 12 is a schematic structural diagram of yet another positive electrode plate in an electrode assembly according to some embodiments of this application;
FIG. 13 is a schematic structural diagram of yet another positive electrode plate in an electrode assembly according to some embodiments of this application;
FIG. 14 is a partially enlarged view of position B in FIG. 13;
FIG. 15 is an isometric view of an inactivation apparatus of a winding device according to some embodiments of this application;
FIG. 16 is a front view of an inactivation apparatus of a winding device according to some embodiments of this application;
FIG. 17 is a top view of an inactivation apparatus of a winding device according to some embodiments of this application;
FIG. 18 is an isometric view of an inactivation apparatus provided with a liquid supply mechanism in a winding device according to some embodiments of this application;
FIG. 19 is a schematic diagram of a manufacturing method of electrode assembly according to some embodiments of this application; and
FIG. 20 is a schematic diagram of a method for inactivating a positive electrode active substance layer in a manufacturing method of electrode assembly according to some embodiments of this application.

The accompanying drawings are not drawn to scale.

Reference signs: 1000. vehicle; 100. battery; 110. battery cell; 111. housing; 1111. shell; 1112. cover; 1113. electrode terminal; 112. electrode assembly; 1121. positive electrode plate; 11211. positive electrode current collector; 11212. positive electrode active substance layer; 11213. first inner side surface; 11214. first outer side surface; 11215. first positive electrode active substance layer; 11216. second positive electrode active substance layer; 11217. bending region; 11218. straight region; 1122. negative electrode plate; 11221. negative electrode current collector; 11222. negative electrode active substance layer; 1123. first separator; 1124. second separator; 11251. straight part; 11252. bending part; 1127. inactive region; 1128. active region; 1129. tab; 120. box; 121. first box body; 122. second box body; 200. controller; 300. motor; 2000. winding device; 2100. winding apparatus; 2200. inactivation apparatus; 2210. clamping mechanism; 2211. bracket; 2212. first clamping portion; 2213. second clamping portion; 2214. first driving member; 2220. driving mechanism; 2221. lead screw; 2222. second driving member; 2230. detection mechanism; 2240. rack; 2250. liquid supply mechanism; 2251. liquid storage container; and 2252. pump.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

In this application, "a plurality of means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. The battery cell is typically divided into three types by packaging method: cylindrical cell, prismatic cell, and pouch cell.

The battery mentioned in the embodiments of this application is a single physical module that includes one or more battery cells for providing a higher voltage and capacity. For example, the battery mentioned in this application may include a battery module, a battery pack, or the like. The battery typically includes a box configured to enclose one or more battery cells. The box can prevent liquids or other foreign matter from affecting charging or discharging of the battery cell.

The battery cell includes an electrode assembly and an electrolyte, and the battery cell mainly functions relying on migration of metal ions between the positive electrode plate and the negative electrode plate. The positive electrode plate includes a positive electrode current collector and a positive electrode active substance layer, where the positive electrode active substance layer is applied on a surface of the positive electrode current collector. The negative electrode plate includes a negative electrode current collector and a negative electrode active substance layer, where the negative electrode active substance layer is applied on a surface of the negative electrode current collector. The electrode assembly is a wound structure.

A CB value refers to a ratio of a negative electrode active substance capacity of a negative electrode plate to a positive electrode active substance capacity on the directly opposite side, or refers to a ratio of effective active area of a negative electrode active substance layer of a negative electrode plate to effective active area of a positive electrode active substance capacity on the directly opposite side.

In the related art, after an electrode assembly is wound, there is an area difference between the positive electrode plate and the negative electrode plate in the bending part of the electrode assembly within a same angle range, likely causing lithium precipitation and safety hazards.

Through research, the inventors have found that if a gap between the positive electrode plate and negative electrode plate in the bending part of the electrode assembly becomes larger, for example, the negative electrode plate collapses inward or the positive electrode plate loosens outward, the CB value between the outer side of the negative electrode plate at the bending part and the positive electrode plate correspondingly disposed on the outer side is reduced. As a result, the lithium ions deintercalated from the positive electrode active substance layer during the charging process of the battery cell cannot be all intercalated into the corresponding negative electrode active substance layer, leading to lithium precipitation.

Based on the above considerations, the inventors of this application have proposed a technical solution of forming an inactive region on a surface of the positive electrode plate at the bending part of the electrode assembly, which can reduce effective area of a positive electrode active substance layer in a bending region of the positive electrode plate, thereby increasing a CB value of the bending part of the electrode assembly. This allows the lithium ions deintercalated from the positive electrode active substance layer during the charging process of the battery cell to be effectively intercalated into the corresponding negative electrode active substance layer, alleviating the phenomenon of lithium precipitation at the bending part of the electrode assembly, thereby improving safety performance of the electrode assembly.

It can be understood that the battery cell described in the embodiments of this application may directly supply power to an electric apparatus, or may be connected in series or in parallel to form a battery that supplies power to various electric apparatuses.

It can be understood that the electric apparatus that is described in the embodiments of this application and to which use of the battery cell or battery is applicable may be in a variety of forms, for example, mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like.

The battery cell and battery described in the embodiments of this application are applicable to not only the electric apparatuses described above, but also all electric apparatuses using the battery cell and the battery. However, for brevity of description, in the following embodiments, an electric vehicle is used as an example for description.

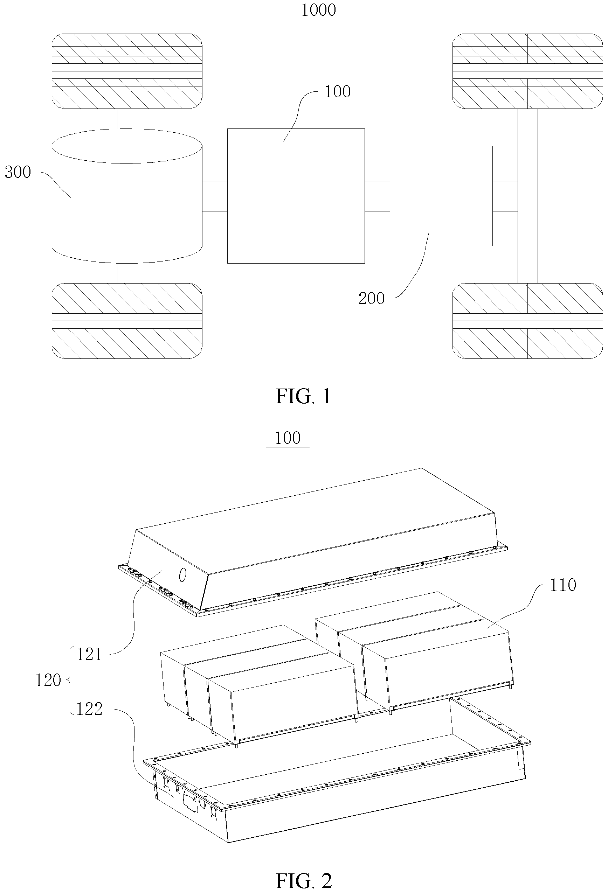

FIG. 1 is a simple schematic diagram of a vehicle according to an embodiment of this application; and FIG. 2 is a schematic structural diagram of a battery of the vehicle in FIG. 1.

As shown in FIG. 1, the vehicle 1000 is provided with a battery 100, a controller 200, and a motor 300 inside. For example, the battery 100 may be disposed at the bottom, front, or rear of the vehicle 1000. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like.

In some embodiments of this application, the battery 100 may be configured to supply power to the vehicle 1000. For example, the battery 100 may be used as an operational power source for the vehicle 1000. The controller 200 is configured to control the battery 100 to supply power to the motor 300, for example, to satisfy power needs of start, navigation, and driving of the vehicle 1000.

In other embodiments, the battery 100 can be used not only as the operational power source for the vehicle 1000, but also as a driving power source for the vehicle 1000, replacing or partially replacing fossil fuel or natural gas to provide driving traction for the vehicle 1000.

The battery 100 mentioned in the embodiments of this application is a single physical module that includes one or more battery cells 110 for providing a higher voltage and capacity. For example, the battery 100 is formed by connecting a plurality of battery cells 110 in series or in parallel.

The battery 100 includes a plurality of battery cells 110 and a box 120. The plurality of battery cells 110 are connected in parallel, in series, or in series-parallel for high-voltage output, and the plurality of battery cells 110 are assembled and placed in the box 120.

The box 120 includes a first box body 121 and a second box body 122. The first box body 121 and the second box body 122 fit together to form a battery chamber, and a plurality of battery modules are placed in the battery chamber. The plurality of battery cells 110 are connected in parallel, in series, or in series-parallel, and then placed into the box 120 formed after the first box body 121 and the second box body 122 are fitted together.

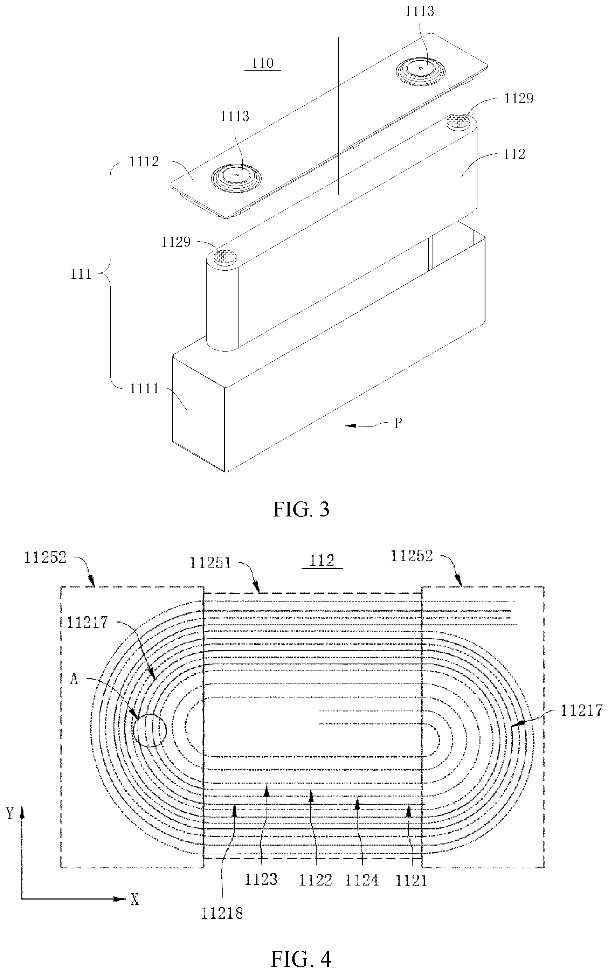

FIG. 3 is a schematic structural diagram of a battery cell in the battery of FIG. 2.

As shown in FIG. 3, each battery cell 110 includes a housing 111, an electrode assembly 112, and two electrode terminals 1113. The housing 111 may be hexahedral or of other shapes. An accommodating cavity is formed inside the housing 111 for accommodating the electrode assembly 112 and the electrolyte. The housing 111 includes a shell 1111 and a cover 1112. The shell 1111 has an opening at one end so that the electrode assembly 112 can be placed inside the shell 1111 through the opening. The shell 1111 may be made of a metal material, such as aluminum, aluminum alloy, or nickel-plated steel. Two electrode terminals 1113 are disposed on the cover 1112. Of the two electrode terminals 1113, one is a positive electrode terminal 1113 and the other is a negative electrode terminal 1113. The shell 1111 may be a cuboid, a cylinder, or an elliptical cylinder. The two electrode terminals 1113 may both be disposed on the cover 1112 or the shell 1111, or one may be disposed on the cover 1112 and the other may be disposed on the shell 1111.

The electrode assembly 112 is disposed inside the housing 111. The electrode assembly 112 includes two tabs 1129 with opposite polarities. The positive electrode terminal 1113 is connected to the positive electrode tab 1129 of the electrode assembly 112, and the negative electrode terminal 1113 is connected to the negative electrode tab 1129 of the electrode assembly 112.

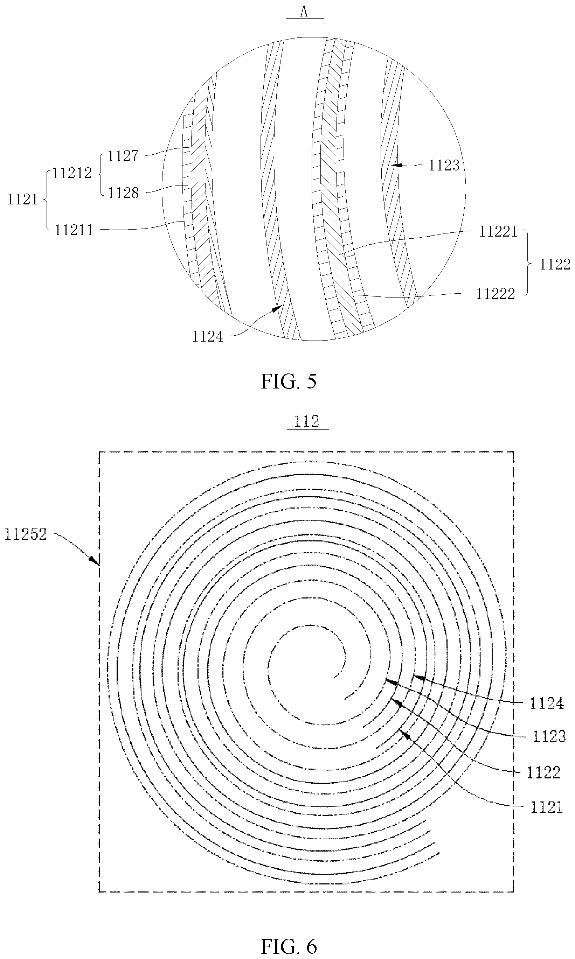

FIG. 4 is a structural diagram of one form of electrode assembly according to some embodiments of this application; and FIG. 5 is a partially enlarged view of position A in FIG. 4.

As shown in FIGs. 3, 4, and 5, the electrode assembly 112 includes a positive electrode plate 1121, a negative electrode plate 1122, a first separator 1123, and a second separator 1124. The first separator 1123 and the second separator 1124 are configured to separate the adjacent positive electrode plate 1121 and negative electrode plate 1122. The positive electrode plate 1121, the negative electrode plate 1122, the first separator 1123, and the second separator 1124 are wound to form the electrode assembly 112. A winding axis of the electrode assembly 112 is a first axis P.

The positive electrode plate 1121 includes a positive electrode current collector 11211 and a positive electrode active substance layer 11212, where the positive electrode active substance layer 11212 is applied on a surface of the positive electrode current collector 11211. The negative electrode plate 1122 includes a negative electrode current collector 11221 and a negative electrode active substance layer 11222, where the negative electrode active substance layer 11222 is applied on a surface of the negative electrode current collector 11221. With a lithium-ion battery as an example, its positive electrode current collector 11211 may be made of aluminum and its positive electrode active substance may be lithium cobaltate, lithium iron phosphate, ternary lithium, lithium manganate, or the like. The part of the positive electrode current collector 11211 uncoated with the positive electrode active substance layer 11212 protrudes from the part coated with the positive electrode active substance layer 11212, and the part of the positive electrode current collector 11211 uncoated with the positive electrode active substance layer 11212 serves as the positive electrode tab 1129 (refer to FIG. 3). The negative electrode current collector 11221 may be made of copper, and a negative electrode active substance may be carbon, silicon, or the like. The part of the negative electrode current collector 11221 uncoated with the negative electrode active substance layer 11222 protrudes from the part coated with the negative electrode active substance layer 11222, and the part of the negative electrode current collector 11221 uncoated with the negative electrode active substance layer 11222 serves as the negative electrode tab 1129 (refer to FIG. 3). To allow a large current to pass through without fusion, a plurality of positive electrode tabs 1129 are stacked together, and a plurality of negative electrode tabs 1129 are stacked together. The separator may be made of PP (polypropylene, polypropylene), PE (polyethylene, polyethylene), or the like.

As shown in FIG. 4, in some embodiments of this application, the electrode assembly 112 is flat, and on a plane perpendicular to its winding axis, a length direction of the electrode assembly 112 is direction X and a width direction of the electrode assembly 112 is direction Y. Specifically, the electrode assembly 112 includes a straight part 11251 and bending parts 11252 located on two sides of the straight part 11251 along the direction X, the two bending parts 11252 each having an arc surface. The electrode assembly 112 may be directly wound into a flat shape, or may be wound into a circular shape or an oval shape and then compacted in middle part so as to form the straight part 11251 in the middle part of the electrode assembly 112.

FIG. 6 is a structural diagram of another form of electrode assembly according to some embodiments of this application.

As shown in FIG. 6, in other embodiments, the electrode assembly 112 may be cylindrical, and the electrode assembly 112 only includes the bending part 11252.

The positive electrode plate 1121, the negative electrode plate 1122, and the separator each have a bending structure corresponding to the bending part of the electrode assembly 112, and the part where the positive electrode plate 1121 winds through the bending part of the electrode assembly 112 is the bending region 11217.

For example, as shown in FIG. 4, for the flat electrode assembly 112, two bending regions 11217 are formed each time the positive electrode plate 1121 is wound one turn. The two bending regions 11217 respectively correspond to the two bending parts 11252 of the electrode assembly 112, and a part between the two bending regions 11217 is a straight region 11218 and corresponds to the straight part 11251 of the electrode assembly 112.

It can be understood that one turn in this application means going around the winding direction once from a certain point of the electrode assembly 112 as a start point to another point, where a connecting line between the another point and the start point extends along a radial direction of the electrode assembly 112. In this application, half-turn refers to half a turn. Persons skilled in the art should understand meanings of other numbers of turns, and details are not described herein.

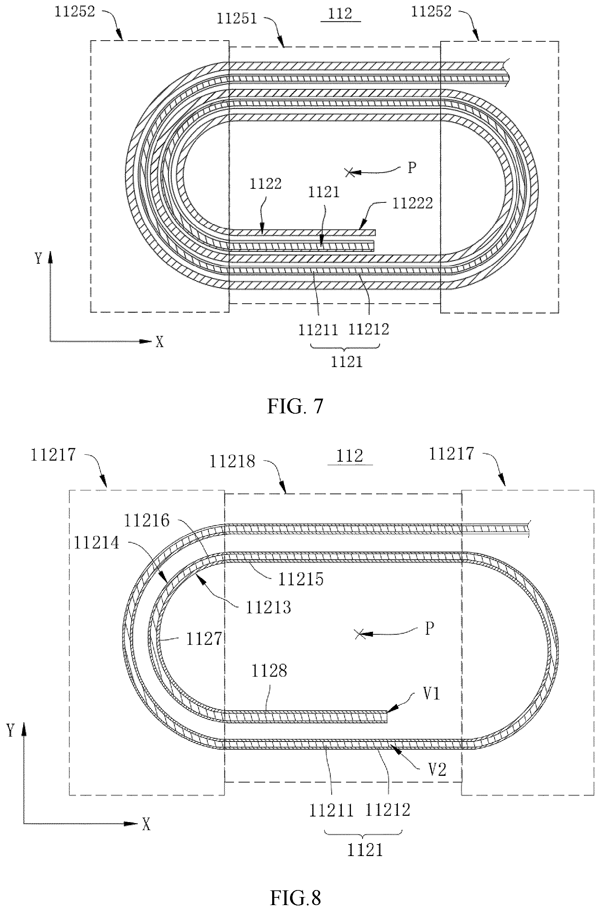

FIG. 7 is a schematic diagram of winding of a positive electrode plate and a negative electrode plate in an electrode assembly according to some embodiments of this application; and FIG. 8 is a schematic diagram of winding of a positive electrode plate in an electrode assembly according to some embodiments of this application.

As shown in FIGs. 7 and 8, some embodiments of this application propose an electrode assembly 112 including a positive electrode plate 1121, where a bending region 11217 is formed after the positive electrode plate 1121 is wound. The positive electrode plate 1121 includes a positive electrode current collector 11211 and a positive electrode active substance layer 11212 disposed on a surface of the positive electrode current collector 11211. The positive electrode active substance layer 11212 includes an inactive region 1127, and at least part of the inactive region 1127 is located in the bending region 11217.

The positive electrode active substance layer 11212 includes an active region 1128 and the inactive region 1127. The active region 1128 is a region that deintercalates lithium ions during charging and discharging and has active substance capacity. The inactive region 1127 is a partial region of the positive electrode active substance layer that loses activity, meaning that the positive electrode active substance layer 11212 in that region no longer deintercalates lithium ions during charging and discharging. The inactive region 1127 can be formed on the positive electrode active substance layer 11212 in multiple ways. For example, an acidic solution such as dilute hydrochloric acid can be sprayed on the position of the positive electrode active substance layer 11212 used for forming the inactive region 1127, or an insulating liquid such as liquid glue can be used to soak the position of the positive electrode active substance layer 11212 used for forming the inactive region 1127.

The inactive region 1127 can only exist in the bending region 11217 of the positive electrode plate 1121 to alleviate the lithium precipitation phenomenon at the bending part of the electrode assembly 112. In an embodiment where the electrode assembly 112 is flat, the positive electrode plate 1121 has two bending regions 11217 in one turn, and each bending region 11217 is provided with one inactive region 1127. Alternatively, the inactive region 1127 can exist in both the bending region 11217 of the positive electrode plate 1121 and the straight region 11218 of the positive electrode plate 1121. When the inactive region 1127 also exists in the straight region 11218, area of the positive electrode active substance layer 11212 is further reduced, so that the lithium ions deintercalated from the positive electrode active substance layer 11212 can all be intercalated into the negative electrode active substance layer 11222 of the corresponding negative electrode plate 1122, preventing occurrence of lithium precipitation in the straight part 11251 of the electrode assembly 112. For example, as shown in FIG. 8, in an embodiment where the electrode assembly 112 is flat, the innermost turn of the positive electrode plate 1121 extends along the winding direction from a winding-in end, and part of the straight region 11218 and the bending region 11217 are formed in sequence, where the continuous inactive region 1127 is disposed in the part of the straight region 11218 and the bending region 11217.

As shown in FIG. 8, the inactive region 1127 can also exist at both an inner side of the positive electrode plate 1121 facing a first axis P and an outer side facing away from the first axis P, so that the CB values corresponding to these two sides of the positive electrode plate 1121 are increased. The inactive region 1127 can be disposed at the inner side of the positive electrode plate 1121 facing the winding axis (that is, the first axis P) of the electrode assembly 112 to increase the CB value between the negative electrode plate 1122 and the positive electrode plate 1121 on the outer side. The inactive region 1127 can be disposed at the outer side of the positive electrode plate 1121 facing away from the first axis P to increase the CB value between the negative electrode plate 1122 and the positive electrode plate 1121 on the inner side.

The positive electrode plate 1121 is a multi-turn winding structure. An end of the positive electrode plate 1121 close to the first axis P is the winding-in end, and an end on the outer peripheral side of the positive electrode plate 1121 is a terminating end. The inactive region 1127 may be disposed at a part of the positive electrode plate 1121 close to the winding-in end, or at other parts.

In the electrode assembly 112 of the embodiment of this application, since at least part of the inactive region 1127 of the positive electrode active substance layer 11212 is located in the bending region 11217 of the positive electrode plate 1121, effective active area of the positive electrode active substance layer 11212 in the bending region 11217 of the positive electrode plate 1121 can be reduced, thereby increasing the CB value (that is, a ratio of a negative electrode active substance capacity to a positive electrode active substance capacity on the directly opposite side) of the bending part of the electrode assembly 112. This allows the lithium ions deintercalated from the positive electrode active substance layer 11212 during the charging process of the battery cell 110 to be effectively intercalated into the corresponding negative electrode active substance layer 11222, alleviating the phenomenon of lithium precipitation at the bending part of the electrode assembly 112, thereby improving safety performance of the electrode assembly 112.

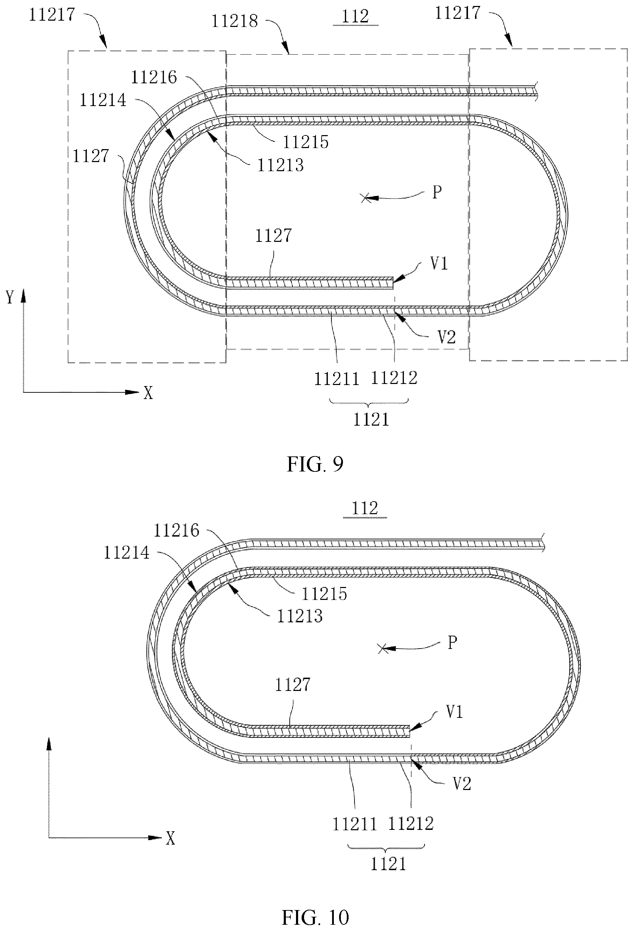

FIG. 9 is a schematic structural diagram of still another form of positive electrode plate in an electrode assembly according to some embodiments of this application.

As shown in FIG. 9, in some embodiments of this application, the positive electrode current collector 11211 includes an inner side surface facing an axis (that is, the first axis P) of the electrode assembly 112 and an outer side surface facing away from the axis (that is, the first axis P) of the electrode assembly 112. The positive electrode active substance layer 11212 includes a first positive electrode active substance layer 11215 disposed on the inner side surface of the positive electrode current collector 11211 and a second positive electrode active substance layer 11216 disposed on the outer side surface of the positive electrode current collector 11211. The first positive electrode active substance layer 11215 includes the inactive region 1127.

Specifically, as shown in FIG. 9, along a thickness direction of the positive electrode current collector 11211, a side of the positive electrode current collector 11211 facing the first axis P is a first inner side surface 11213, and a side facing away from the first axis P is a first outer side surface 11214. A first positive electrode active substance layer 11215 is disposed on the first inner side surface 11213 of the positive electrode current collector 11211, and a second positive electrode active substance layer 11216 is disposed on the first outer side surface 11214. Similarly, along a thickness direction of the negative electrode current collector 11221, a first negative electrode active substance layer (not shown in the figure) is disposed on an inner side surface of the negative electrode current collector 11221 facing the first axis P, and a second negative electrode active substance layer (not shown in the figure) is disposed on an outer side surface of the negative electrode current collector 11221 facing away from the first axis P. The first positive electrode active substance layer 11215 is disposed corresponding to the second negative electrode active substance layer, and the inactive region 1127 is disposed on the first positive electrode active substance layer 11215, which can increase the CB value between the first positive electrode active substance layer 11215 and the second negative electrode active substance layer, thereby avoiding lithium precipitation.

In the foregoing solution, since area of the first positive electrode active substance layer 11215 disposed on the inner side surface of the positive electrode current collector 11211 is larger than area of the negative electrode active substance layer 11222 of the corresponding negative electrode current collector 11221, arranging the inactive region 1127 on the first positive electrode active substance layer 11215 can reduce the effective active area of the first positive electrode active substance layer 11215 and increase the CB value between the outer side of the negative electrode plate 1122 and the inner side of the positive electrode plate 1121 in the bending part of the electrode assembly 112. This allows most of the lithium ions deintercalated from the first positive electrode active substance layer 11215 during the charging process of the battery cell 110 to be intercalated into the corresponding negative electrode active substance layer 11222, alleviating the phenomenon of lithium precipitation between the inner side surface of the positive electrode current collector 11211 and the negative electrode current collector 11221 on the inner side, thereby improving the safety performance of the electrode assembly 112.

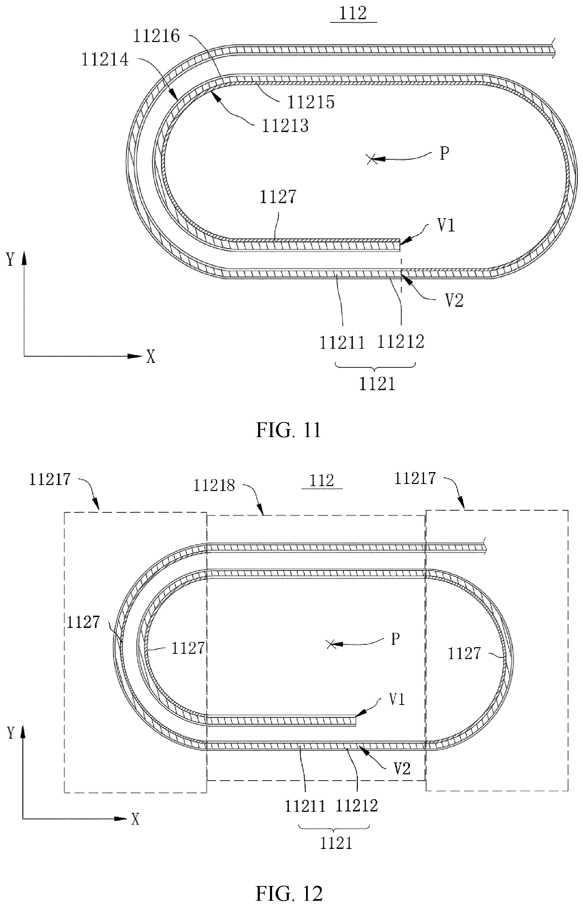

FIG. 10 is a schematic structural diagram of yet another positive electrode plate in an electrode assembly according to some embodiments of this application; and FIG. 11 is a schematic structural diagram of yet another positive electrode plate in an electrode assembly according to some embodiments of this application.

As shown in FIG. 10, in some embodiments of this application, the inactive region 1127 is located at the innermost turn of the positive electrode plate 1121 of the electrode assembly 112.

As shown in FIG. 10, the innermost turn of the positive electrode plate 1121 of the electrode assembly 112 refers to a turn extending from the winding-in end of the positive electrode plate 1121 along the winding direction to the terminating end, that is, the part of the positive electrode plate 1121 from V1 to V2.

As shown in FIG. 10, the inactive region 1127 can be located at both the inner side and outer side of the innermost turn of the positive electrode plate 1121. As shown in FIG. 11, the inactive region 1127 can be located at the inner side of the innermost turn of the positive electrode plate 1121, or the inactive region 1127 can be located at the outer side of the innermost turn of the positive electrode plate 1121.

In the foregoing solution, the radius of curvature of the innermost turn of the positive electrode plate 1121 is the smallest, resulting in the largest area ratio between the positive electrode active substance layer 11212 on the inner side surface of the innermost turn of the positive electrode plate 1121 and the negative electrode active substance layer 11222 on the inner turn of the corresponding negative electrode plate 1122. Arranging the inactive region 1127 on the innermost turn of the positive electrode plate 1121 can obviously increase the CB value between the inner side of the innermost turn of the positive electrode plate 1121 and the negative electrode plate 1122 on its inner side, so that the lithium ions deintercalated from the positive electrode active substance layer 11212 during the charging process of the battery cell 110 can be effectively intercalated into the corresponding negative electrode active substance layer 11222, alleviating the lithium precipitation phenomenon and improving the safety performance of the electrode assembly 112.

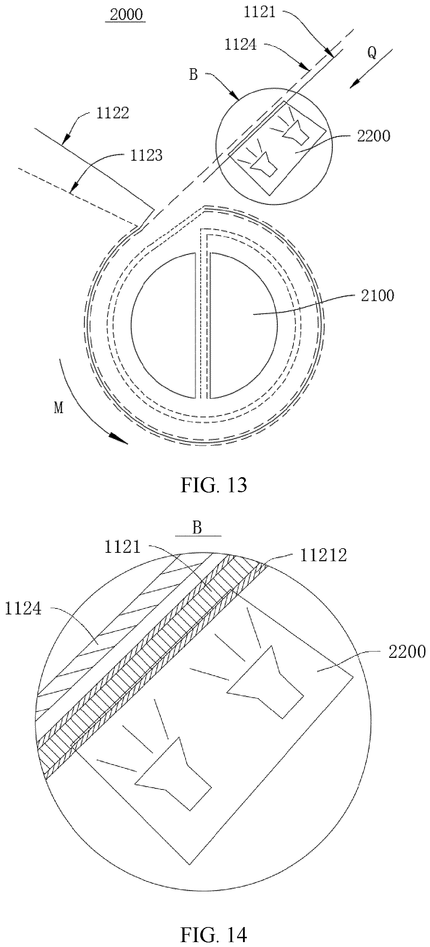

FIG. 12 is a schematic structural diagram of yet another positive electrode plate in an electrode assembly according to some embodiments of this application; and FIG. 13 is a schematic structural diagram of yet another positive electrode plate in an electrode assembly according to some embodiments of this application.

As shown in FIG. 12, in some embodiments of this application, the inactive region 1127 is provided in a quantity of at least two, and the at least two inactive regions 1127 are spaced apart in a winding direction.

The at least two inactive regions 1127 may be disposed in different bending regions 11217. For example, as shown in FIG. 12, in an embodiment where the electrode assembly 112 is flat, each of the two bending regions 11217 in one turn of the positive electrode plate 1121 is provided with one inactive region 1127. In a preferred embodiment, the inactive region 1127 is provided in a quantity of two, and each of the two bending regions 11217 in the innermost turn of the positive electrode plate 1121 is provided with one inactive region 1127, which can significantly alleviate the lithium precipitation phenomenon in the innermost turn of the positive electrode plate 1121.

Alternatively, of the at least two inactive regions 1127, a portion of the inactive regions 1127 may be disposed in the bending region, and the other portion may be disposed in the straight region. For example, in the embodiment where the inactive region 1127 is disposed on the innermost turn of the positive electrode plate 1121, the continuous inactive region 1127 is disposed in the straight region and the bending region on the innermost turn of the positive electrode plate 1121.

The at least two inactive regions 1127 may alternatively be disposed in a same bending region, and the at least two inactive regions 1127 are spaced apart along the winding direction. For example, in the embodiment where the electrode assembly 112 is cylindrical, the entire circumferential region of the electrode assembly 112 around the first axis P is the bending part, and a plurality of inactive regions 1127 are spaced apart along a length direction of the positive electrode plate 1121.

In the foregoing solution, each turn of the positive electrode plate 1121 includes two bending regions along the winding direction, and each bending region is provided with one inactive region 1127, thereby alleviating the lithium precipitation phenomenon at the bending part of the electrode assembly 112 and improving the safety performance of the electrode assembly 112.

In other embodiments, the number of inactive regions 1127 may be one, and the one inactive region 1127 is disposed in the bending region 11217 of the positive electrode plate 1121 or is present continuously in the adjacent bending region 11217 and the straight region 11218.

Some embodiments of this application propose a battery cell 110 including the electrode assembly 112.

Since the bending region of the positive electrode plate 1121 in the electrode assembly 112 has the inactive region 1127, the lithium precipitation phenomenon at the bending part of the electrode assembly 112 can be alleviated, and the safety performance of the electrode assembly 112 can be improved, so that the battery cell 110 including the electrode assembly 112 also has good safety performance.

Some embodiments of this application propose a battery 100 including the battery cell 110.

Since the bending region of the positive electrode plate 1121 in the electrode assembly 112 used by the battery cell 110 has the inactive region 1127, the lithium precipitation phenomenon at the bending part of the electrode assembly 112 can be alleviated, and the safety performance is good, so that the battery 100 including such battery cell 110 also has good safety performance.

Some embodiments of this application propose an electric apparatus including the battery 100, where the battery 100 is configured to supply electric energy.

Since the bending region of the positive electrode plate 1121 in the electrode assembly 112 used by the battery cell 110 of the battery 100 has the inactive region 1127, the lithium precipitation phenomenon at the bending part of the electrode assembly 112 can be alleviated, and the safety performance is good, so that the electric apparatus including the battery 100 also has good safety performance.

FIG. 13 is a schematic structural diagram of a winding device according to some embodiments of this application; and FIG. 14 is a partially enlarged view of position B in FIG. 13.

Some embodiments of this application propose a winding device 2000 including a winding apparatus 2100 and an inactivation apparatus 2200. The winding apparatus 2100 is configured to wind a positive electrode plate 1121. The inactivation apparatus 2200 is disposed upstream of the winding apparatus 2100 along a conveying direction of the positive electrode plate 1121, and the inactivation apparatus 2200 is configured to provide an inactivating agent to the positive electrode plate 1121 to inactivate a positive electrode active substance at part of a positive electrode active substance layer 11212 of the positive electrode plate 1121.

It can be understood that the process of winding the electrode assembly 112 in some embodiments of this application may be implemented by, without limitation to, the winding device 2000 in the embodiments of this application; and the winding device 2000 in the embodiments of this application is configured for, without limitation to, winding the electrode assembly 112 in some embodiments of this application.

The winding device 2000 further includes feeding apparatuses corresponding to the positive electrode plate 1121, the negative electrode plate 1122, the first separator 1123, and the second separator 1124, which are arranged upstream of the winding apparatus 2100 and configured to provide the positive electrode plate 1121, the negative electrode plate 1122, the first separator 1123, and the second separator 1124, respectively. The positive electrode plate 1121, the negative electrode plate 1122, the first separator 1123 and the second separator 1124 enter the winding apparatus 2100 from the upstream of the winding apparatus 2100 so as to be wound to form the electrode assembly 112. The upstream of the winding apparatus 2100 refers to a feeding side of the winding apparatus 2100, that is, a side of the winding apparatus 2100 facing the feeding apparatus.

A conveying direction of the positive electrode plate 1121 refers to a direction, that is, a first direction Q, in which the positive electrode plate 1121 enters the winding apparatus 2100 from the corresponding feeding apparatus when the winding apparatus 2100 rotates along a second direction M to wind the electrode assembly 112. The inactivation apparatus 2200 extends along the first direction Q to provide the inactivating agent to a surface of the positive electrode plate 1121 traveling along the first direction Q, so as to form an inactive region 1127 on the positive electrode active substance layer 11212 of the positive electrode plate 1121.

The inactivation apparatus 2200 may provide the inactivating agent to both side surfaces of the positive electrode plate 1121; or the inactivation apparatus 2200 may provide the inactivating agent to one side surface of the positive electrode plate 1121. The inactivation apparatus 2200 may provide the inactivating agent in a stationary manner. When conveyed along the first direction Q, the positive electrode plate 1121 passes by the inactivation apparatus 2200 and has the inactive region 1127 formed. The inactivation apparatus 2200 may alternatively move synchronously with the positive electrode plate 1121 to continuously provide the inactivating agent to the surface of the positive electrode plate 1121. The inactivation apparatus 2200 may provide the inactivating agent to the positive electrode plate 1121 by spraying on one side, pressing, or the like. The inactivation apparatus 2200 may also clamp the positive electrode plate 1121 by two sides along a thickness direction and provide the inactivating agent to the surface of the positive electrode plate 1121.

The inactivating agent may be an acidic solution, such as dilute hydrochloric acid; or the inactivating agent may be an insulating solution, such as liquid glue.

In the winding device 2000 of the embodiments of this application, the inactivation apparatus 2200 can provide the inactivating agent to the positive electrode plate 1121 to inactivate the positive electrode active substance at part of the positive electrode active substance layer 11212 of the positive electrode plate 1121 to form the inactive region 1127, so that the positive electrode plate 1121 wound by the winding device 2000 during winding of the electrode assembly 112 has the inactive region 1127. In this way, the electrode assembly 112 in some embodiments of this application can be formed, and industrialized production of such electrode assembly 112 can be realized, improving the forming efficiency of such electrode assembly 112.

As shown in FIGs. 13 and 14, in some embodiments of this application, the inactivation apparatus 2200 is configured to provide the inactivating agent to a side of the positive electrode plate 1121 facing the winding apparatus 2100.

Specifically, after the first separator 1123, the negative electrode plate 1122, and the second separator 1124 have been stacked and wound on the winding apparatus 2100, the positive electrode plate 1121 enters the winding apparatus 2100 from a side of the second separator 1124 facing the winding apparatus 2100. The side of the positive electrode plate 1121 facing the winding apparatus 2100 refers to a side of the positive electrode plate 1121 facing away from the second separator 1124. After the positive electrode plate 1121 is wound on the winding apparatus 2100, the side of the positive electrode plate 1121 facing the winding apparatus 2100 is the inner side surface of the positive electrode plate 1121, and the corresponding positive electrode active substance layer 11212 is the first positive electrode active substance layer 11212.

In the foregoing solution, the inactivation apparatus 2200 provides the inactivating agent to the side of the positive electrode plate 1121 facing the winding apparatus 2100, so that after the positive electrode plate 1121 enters the winding apparatus 2100, its inner side facing the winding apparatus 2100 is located on a side facing the winding axis, making the inactive region 1127 located at the first positive electrode active substance layer 11215 on the inner side surface of the positive electrode current collector 11211 (refer to FIG. 8). This can increase the CB value between the outer side of the negative electrode plate 1122 and the inner side of the positive electrode plate 1121, and alleviate the lithium precipitation phenomenon between the inner side surface of the positive electrode current collector 11211 and the negative electrode current collector 11221 of the negative electrode plate 1122 on its inner side, thereby improving the safety performance of the electrode assembly 112.

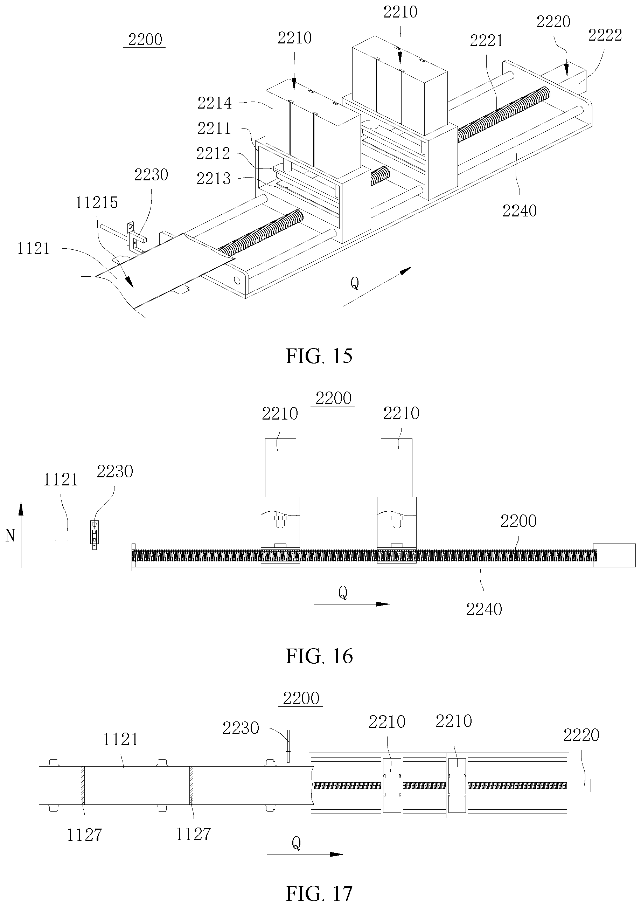

FIG. 15 is an isometric view of an inactivation apparatus of a winding device according to some embodiments of this application; FIG. 16 is a front view of an inactivation apparatus of a winding device according to some embodiments of this application; and FIG. 17 is a top view of an inactivation apparatus of a winding device according to some embodiments of this application.

As shown in FIGs. 15, 16, and 17, in some embodiments of this application, the inactivation apparatus 2200 includes a clamping mechanism 2210 and a driving mechanism 2220. The clamping mechanism 2210 is configured to clamp the positive electrode plate 1121 and provide an inactivating agent to the positive electrode plate 1121. The driving mechanism 2220 is configured to drive the clamping mechanism 2210 to move synchronously with the positive electrode plate 1121.

The driving mechanism 2220 may be a linear driving member in a plurality of forms, such as a linear cylinder, an electric actuator, or a motor screw-nut mechanism, to drive the clamping mechanism 2210 to move along the first direction Q.

While the clamping mechanism 2210 clamps the positive electrode plate 1121 from two sides along the thickness direction of the positive electrode plate 1121, an end with the inactivating agent presses against the positive electrode active substance layer 11212 of the positive electrode plate 1121 to provide the inactivating agent to the surface of the positive electrode plate 1121.

One clamping mechanisms 2210 may be provided, and the driving mechanism 2220 drives the one clamping mechanism 2210 to move along the first direction Q. Alternatively, a plurality of clamping mechanisms 2210 may be provided, the plurality of clamping mechanisms 2210 are spaced apart along the first direction Q, and the driving mechanism 2220 drives the plurality of clamping mechanisms 2210 to move synchronously.

In the foregoing solution, the driving mechanism 2220 drives the clamping mechanism 2210 to move synchronously with the positive electrode plate 1121, and the inactivating agent can be continuously provided to the positive electrode plate 1121 within the time range when the clamping mechanism 2210 moves with the positive electrode plate 1121, ensuring the inactivation effect on the positive electrode active substance layer 11212 of the positive electrode plate 1121 and formation of the effective inactive region 1127 (refer to FIG. 8).

As shown in FIGs. 15 and 16, in some embodiments of the application, the clamping mechanism 2210 includes a bracket 2211, a first clamping portion 2212, a second clamping portion 2213, and a first driving member 2214, where the first clamping portion 2212, the second clamping portion 2213, and the first driving member 2214 are all disposed on the bracket 2211. The first driving member 2214 is configured to drive the first clamping portion 2212 and the second clamping portion 2213 to approach or move away from each other to clamp or release the positive electrode plate 1121. At least one of the first clamping portion 2212 and the second clamping portion 2213 is configured to provide the inactivating agent to the positive electrode plate 1121.

Specifically, the inactivation apparatus 2200 further includes a rack 2240, the driving mechanism 2220 and the bracket 2211 are both mounted on the bracket 2211, and a gap is present between the first clamping portion 2212 and the second clamping portion 2213 for the positive electrode plate 1121 to pass through. The thickness direction of the positive electrode plate 1121 is a third direction N, and two first driving members 2214 are provided. Each first driving member 2214 drives the corresponding clamping portion to move along the third direction N, so that the first clamping portion 2212 and the second clamping portion 2213 approach or move away from each other. Alternatively, of the first clamping portion 2212 and the second clamping portion 2213, the second clamping portion 2213 may be fixedly mounted on the bracket 2211, the first clamping portion 2212 may be mounted at an actuating end of the first driving member 2214, and the first driving member 2214 drives the first clamping portion 2212 to approach or move away from the second clamping portion 2213 along the third direction N.

One of the first clamping portion 2212 and the second clamping portion 2213 is capable of providing the inactivating agent, and the other is configured to support the positive electrode plate 1121. For example, as shown in FIGs. 15 and 16, in the embodiment where the inactivation apparatus 2200 provides the inactivating agent to one side surface of the positive electrode plate 1121, the second clamping portion 2213 is fixedly mounted on the bracket 2211, the first driving member 2214 is mounted on the bracket 2211, and the first driving member 2214 drives the first clamping portion 2212 to approach the second clamping portion 2213 to clamp the positive electrode plate 1121, so as to press the positive electrode plate 1121 against the second clamping portion 2213. The first clamping portion 2212 provides the inactivating agent to the surface of the positive electrode plate 1121, so as to form the inactive region 1127 on one side surface of the positive electrode plate 1121.

Both the first clamping portion 2212 and the second clamping portion 2213 are capable of providing the inactivating agent. For example, in the embodiment where the inactivation apparatus 2200 provides the inactivating agent to both side surfaces of the positive electrode plate 1121, while the first clamping portion 2212 and the second clamping portion 2213 jointly clamp the positive electrode plate 1121, they provide the inactivating agent to the surfaces of the positive electrode plate 1121, so as to form inactive regions 1127 on both side surfaces of the positive electrode plate 1121.

The first driving member 2214 may be a common linear driving mechanism 2220, such as a linear cylinder or an electric actuator. The second clamping portion 2213 may be in slidable fit with the bracket 2211, or may be provided independently of the bracket 2211.

In the foregoing solution, the first clamping portion 2212 and the second clamping portion 2213 jointly clamp the positive electrode plate 1121 and provide the inactivating agent to the positive electrode plate 1121, so that the position accuracy of the inactive region 1127 can be improved and an effective inactive region 1127 can be formed at the preset position of the positive electrode plate 1121.

In some embodiments of this application, at least one of the first clamping portion 2212 and the second clamping portion 2213 is made of a porous material.

The porous material can store and absorb the inactivating agent, and release the inactivating agent when squeezed. The porous material may be sponge or another elastic porous material.

Of the first clamping portion 2212 and the second clamping portion 2213, the one used for providing the inactivating agent to the surface of the positive electrode plate 1121 is made of a porous material. For example, in the embodiment where the first clamping portion 2212 provides the inactivating agent to one side surface of the positive electrode plate 1121, the first clamping portion 2212 is an absorbent which is made of a porous material, and the second clamping portion 2213 is a pad; in the embodiment where the first clamping portion 2212 and the second clamping portion 2213 respectively provide the inactivating agent to two side surfaces of the positive electrode plate 1121, the first clamping portion 2212 and the second clamping portion 2213 are both made of porous materials.

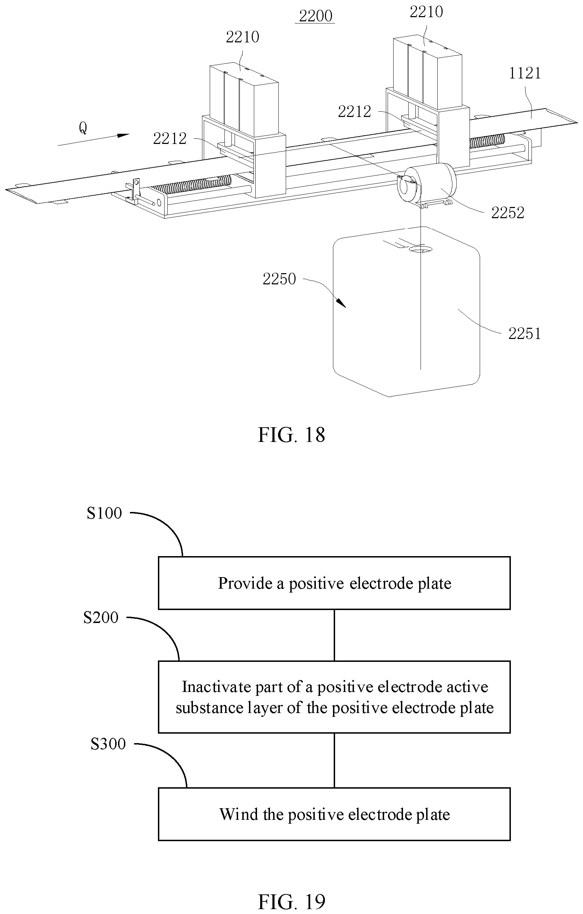

FIG. 18 is an isometric view of an inactivation apparatus provided with a liquid supply mechanism in a winding device according to some embodiments of this application.

As shown in FIG. 18, further, the inactivation apparatus 2200 may further include a liquid supply mechanism 2250, where the liquid supply mechanism 2250 includes a liquid storage container 2251 and a pump 2252. The liquid storage container 2251 communicates with the inactivation apparatus 2200 through the pump 2252, and the inactivating agent is supplemented to the porous material of the inactivation apparatus 2200 through the pump 2252.

In the foregoing solution, the porous material can store the inactivating agent. When the first clamping portion 2212 and the second clamping portion 2213 jointly clamp the positive electrode plate 1121, the porous material can be squeezed to extrude the inactivating agent from the porous material to the surface of the positive electrode plate 1121; and when the positive electrode plate 1121 is released, the residual inactivating agent on the surface of the positive electrode plate 1121 can be sucked back. This not only keeps the surface of the positive electrode plate 1121 clean, but also implements recycling of the inactivating agent.

In other embodiments, the first clamping portion 2212 or the second clamping portion 2213 may also have a liquid outlet hole on the surface, the liquid outlet hole communicates with the liquid supply mechanism 2250, and the inactivating agent flows out from the liquid outlet hole through the pump 2252.

As shown in FIGs. 15, 16, and 17, in some embodiments of this application, the driving mechanism 2220 includes a lead screw 2221 and a second driving member 2222. The lead screw 2221 is disposed along a conveying direction (that is, the first direction Q) of the positive electrode plate 1121, and the lead screw 2221 runs through the bracket 2211 and is in threaded fit with the bracket 2211. The second driving member 2222 is configured to drive the lead screw 2221 to rotate, so that the bracket 2211 moves along an axial direction of the lead screw 2221 (that is, the first direction Q).

Specifically, a length direction of the lead screw 2221 extends along the first direction Q, two ends of the lead screw 2221 are rotatably mounted on the rack, and the second driving member 2222 is fixed on the rack and configured to drive the lead screw 2221 to rotate around its own axis. The bracket 2211 of the clamping mechanism 2210 is provided with a threaded hole, and the lead screw 2221 is in threaded fit with the threaded hole. When the lead screw 2221 rotates, it can drive the clamping mechanism 2210 to move along the first direction Q.

The second driving member 2222 may be a motor, and the motor is in transmission fit with an end portion of the lead screw 2221.

In the foregoing solution, rotation of the lead screw 2221 can drive the bracket 2211 to rotate along the axial direction of the lead screw 2221, and further drive the clamping mechanism 2210 to move synchronously with the positive electrode plate 1121. The structure is simple and easy to assemble.

In some embodiments of this application, the inactivation apparatus 2200 includes at least two clamping mechanisms 2210 spaced apart in the conveying direction of the positive electrode plate 1121 (that is, the first direction Q), and the driving mechanism 2220 is configured to drive the at least two clamping mechanisms 2210 to move synchronously.

In the embodiment where the driving mechanism 2220 includes a lead screw 2221 and a second driving member 2222, the brackets 2211 of the plurality of clamping mechanisms 2210 can all be in threaded fit with the lead screw 2221, and when the lead screw 2221 rotates, the plurality of clamping mechanisms 2210 are driven to move synchronously in the same direction. One inactive region 1127 is formed corresponding to one clamping mechanism 2210.

As shown in FIG. 17, for example, the electrode assembly 112 has two inactive regions 1127. When the two inactive regions 1127 are located in the two bending regions on the innermost turn of the positive electrode plate 1121 of the electrode assembly 112, two clamping mechanisms 2210 are provided, one clamping mechanism 2210 corresponding to one inactive region 1127. A distance between the two clamping mechanisms 2210 is equal to a distance between the two bending regions on the innermost turn of the positive electrode plate 1121. An extension length of the absorbent along the first direction Q is an extension length of one inactive region 1127, that is, an extension length of one bending region.

In the foregoing solution, each clamping mechanism 2210 corresponds to one inactive region 1127, and the driving mechanism 2220 drives the at least two clamping mechanisms 2210 to move synchronously, so that the at least two clamping mechanisms 2210 can jointly clamp the positive electrode plate 1121 and move along with the positive electrode plate 1121, so as to form at least two inactive regions 1127, improving the formation efficiency of the inactive regions 1127.

As shown in FIG. 17, in some embodiments of this application, the inactivation apparatus 2200 further includes a detection mechanism 2230 and a controller (not shown in the figure), where the detection mechanism 2230 is configured to detect position information of the positive electrode plate 1121, and the controller is configured to control actions of the clamping mechanism 2210 and the driving mechanism 2220 based on the position information detected by the detection mechanism 2230.

The detection mechanism 2230 is located upstream of the inactivation apparatus 2200 along the first direction Q, that is, on a side close to the feeding apparatus. When conveyed, the positive electrode plate 1121 passes by the detection mechanism 2230, and then enters the inactivation apparatus 2200. When the positive electrode plate 1121 passes by the detection mechanism 2230, the detection mechanism 2230 can detect a marking portion of the positive electrode plate 1121 and send the position information of the positive electrode plate 1121. Based on the received position information of the positive electrode plate 1121 and parameters such as the conveying speed of the positive electrode plate 1121, the controller can calculate the time when the clamping mechanism 2210 clamps the positive electrode plate 1121, the time when the clamping mechanism 2210 starts to move with the positive electrode plate 1121, the speed at which the clamping mechanism 2210 moves synchronously with the positive electrode plate 1121, and the time when the clamping mechanism 2210 releases the positive electrode plate 1121, so as to implement automatic formation of the inactive region 1127.

In the foregoing solution, through provision of the detection mechanism 2230, the position information of the positive electrode plate 1121 can be detected, so that the controller can determine the preset position of the inactive region 1127 of the positive electrode plate 1121, control the clamping mechanism 2210 to accurately perform the clamping action, and control the driving mechanism 2220 to drive the clamping mechanism 2210 to move synchronously with the positive electrode plate 1121. This can improve the position accuracy of the inactive region 1127, so as to form an effective inactive region 1127 at the preset position of the positive electrode plate 1121.

FIG. 19 is a schematic diagram of a manufacturing method of electrode assembly according to some embodiments of this application.

As shown in FIG. 19, some embodiments of this application propose a manufacturing method of electrode assembly, including the following steps.

S 100: Provide a positive electrode plate 1121.

S200: Inactivate part of a positive electrode active substance layer 11212 of the positive electrode plate 1121.

S300: Wind the positive electrode plate 1121.

It can be understood that the manufacturing method of the electrode assembly 112 in the embodiments of this application may be implemented by, without limitation to, the winding device 2000 in the embodiments of this application; and the manufacturing method of the electrode assembly 112 in the embodiments of this application includes but is not limited to winding the electrode assembly 112 in the embodiments of this application. For ease of description, this embodiment further expounds the manufacturing method of the electrode assembly 112 in combination with the winding device 2000.

Before the step S300 of winding a positive electrode plate 1121, the manufacturing method of the electrode assembly 112 includes the following steps.

S400: Provide a first separator 1123 and a second separator 1124.

S500: Wind the first separator 1123 and the second separator 1124 using a winding apparatus 2100.

S600: Provide a negative electrode plate 1122.

S700: Make the negative electrode plate 1122 enter between the first separator 1123 and the second separator 1124, and wind the first separator 1123, the negative electrode plate 1122, and the second separator 1124 that are stacked, where the second separator 1124 is located at a side of the negative electrode plate 1122 facing the winding apparatus 2100.

Before the step S300 of winding the positive electrode plate 1121, the first separator 1123, the negative electrode plate 1122, and the second separator 1124 have been stacked and wound on the winding apparatus 2100, the positive electrode plate 1121 with the inactive region 1127 formed enters the winding apparatus 2100 at last, and the resulting stack is wound to form the electrode assembly 112.

In other embodiments, the step S200 of inactivating part of a positive electrode active substance layer 11212 of the positive electrode plate 1121 may alternatively be forming an inactive region 1127 at other parts of the positive electrode active substance layer 11212 of the positive electrode plate 1121 so as to form the corresponding electrode assembly 112, which is not further described herein.

The step S300 of winding the positive electrode plate 1121 includes the following step.

S310: After the negative electrode plate 1122 is wound at least one turn, make the positive electrode plate 1121 enter from a side of the second separator 1124 facing the winding apparatus 2100.

After the negative electrode plate 1122 is wound at least one turn, the positive electrode plate 1121 enters the winding apparatus 2100 the negative electrode plate 1122 is provided on the inner side of the innermost turn of the positive electrode plate 1121, and the inactive region 1127 is formed on the inner side of the positive electrode plate 1121. This can effectively alleviate the lithium precipitation phenomenon on the inner side of the innermost turn of the positive electrode plate 1121, and improve the safety performance of the electrode assembly 112.

With the manufacturing method of the electrode assembly 112 in the embodiment of this application, an electrode assembly 112 can be manufactured, with at least part of the inactive region 1127 of the positive electrode plate 1121 of the electrode assembly 112 located in the bending region, thereby alleviating the lithium precipitation phenomenon at the bending part of the electrode assembly 112, and delivering good safety performance.

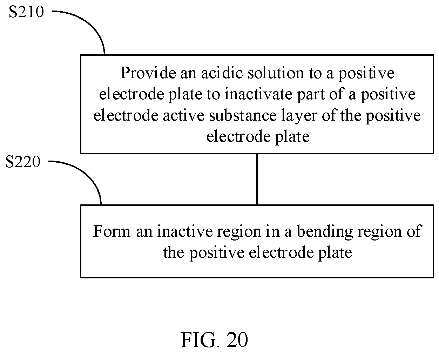

FIG. 20 is a schematic diagram of a method for inactivating a positive electrode active substance layer in a manufacturing method of electrode assembly according to some embodiments of this application.

As shown in FIG. 20, in some embodiments of this application, the step S200 of inactivating part of a positive electrode active substance layer 11212 of the positive electrode plate 1121 includes the following step.

S210: Provide an acidic solution to the positive electrode plate 1121 to inactivate part of the positive electrode active substance layer of the positive electrode plate 1121.

In the foregoing solution, the acidic solution is provided to the positive electrode plate 1121 to inactivate part of the positive electrode active substance layer 11212 through acid-base neutralization. This allows for easy and efficient formation of inactive regions 1127, and also maintains the original shape of the positive electrode active substance layer 11212 and keeps the surface of the positive electrode active substance layer 11212 flat, further alleviating the lithium precipitation phenomenon at the bending part of the electrode assembly 112 while ensuring the working performance of components of the battery 100.

In some embodiments of this application, the step S200 of inactivating part of a positive electrode active substance layer 11212 of the positive electrode plate 1121 includes the following step.

S220: Form an inactive region 1127 in the bending region of the positive electrode plate 1121.

Forming the inactive region 1127 in the bending region of the positive electrode plate 1121 can alleviate the lithium precipitation phenomenon in the bending region, thereby improving the safety performance of the electrode assembly 112.

In other embodiments, the inactivating agent may alternatively be an insulating solution. The portion of the active substance layer on which the inactive region 1127 needs to be formed is infiltrated using the insulating solution, so that this portion loses activity.

In some embodiments of this application, S220 of forming an inactive region 1127 in the bending region of the positive electrode plate 1121 includes the following step.

S221: Inactivate the two bending regions on the inner side surface of the innermost turn of the positive electrode plate 1121.

Inactivating the two bending regions on the inner side surface of the innermost turn of the positive electrode plate 1121 can increase the CB value between the innermost turn of the positive electrode plate 1121 and the negative electrode plate 1122 on its inner side, thereby alleviating the lithium precipitation phenomenon between the innermost turn of the positive electrode plate 1121 and the negative electrode plate 1122 on its inner side.

As shown in FIGs. 4 to 13, some embodiments of this application propose an electrode assembly 112. The electrode assembly 112 is flat. Along a direction X, the electrode assembly 112 includes a straight part 11251 and bending parts 11252 located on two sides of the straight part 11251. The electrode assembly 112 includes a first separator 1123, a negative electrode plate 1122, a second separator 1124, and a positive electrode plate 1121 that are stacked and wound, where a portion of the positive electrode plate 1121 corresponding to the bending part 11252 is a bending region 11217. A first positive electrode active substance layer 11215 is provided on an inner surface of the positive electrode plate 1121. An inactive region 1127 is formed at the first positive electrode active substance layer 11215 through acid-base neutralization, and at least part of the inactive region 1127 is located in the bending region 11217.

Preferably, the inner surface of the innermost turn of the positive electrode plate 1121 (that is, V 1-V2 part) is directly opposite the outer surface of the negative electrode plate 1122, and the two bending regions 11217 on the innermost turn of the positive electrode plate 1121 are formed with the inactive region 1127 on part of their inner surfaces. This can reduce the CB value between the two bending regions 11217 on the innermost turn of the positive electrode plate 1121 and the negative electrode plate 1122 on its inner side, and alleviate the lithium precipitation phenomenon at that position, thereby improving the safety performance of the electrode assembly 112.

As shown in FIGs. 15 to 20, some embodiments of this application propose a winding device 2000 including a winding apparatus 2100 and an inactivation apparatus 2200. The winding apparatus 2100 is configured to wind a positive electrode plate 1121. The inactivation apparatus 2200 is disposed upstream of the winding apparatus 2100 along a conveying direction of the positive electrode plate 1121 (that is, a first direction Q), and corresponds to a side of the positive electrode plate 1121 facing the winding apparatus 2100. The inactivation apparatus 2200 includes a clamping mechanism 2210, a driving mechanism 2220, a detection mechanism 2230, a rack 2240, and a liquid supply mechanism 2250. Two clamping mechanisms 2210 are provided, and the driving mechanism 2220 is a motor screw-nut mechanism. The driving mechanism 2220 simultaneously drives the two clamping mechanisms 2210 to move along the first direction Q, so as to synchronously move with the positive electrode plate 1121. The clamping mechanism 2210 includes a bracket 2211, a first clamping portion 2212, a second clamping portion 2213, and a first driving member 2214, where the bracket 2211 is mounted on the rack 2240, and the second clamping portion 2213 is fixedly mounted on the bracket 2211, and the first clamping portion 2212 is mounted on an actuating end of the first driving member 2214, where the first clamping portion 2212 is made of a porous material such as sponge, and the first clamping portion 2212 is soaked with an inactivating agent. When the positive electrode plate 1121 is conveyed along the first direction Q, the detection mechanism 2230 detects position information of the positive electrode plate 1121, and the controller calculates a position that requires inactivation treatment. When the positive electrode plate 1121 passes by the clamping mechanism 2210, the clamping mechanism 2210 clamps the positive electrode plate 1121 and moves synchronously. Since the first clamping portion 2212 keeps pressing against the surface of the positive electrode plate 1121 for some time, the inactivating agent can be in full contact with the positive electrode active substance layer 11212 of the positive electrode plate 1121 so as to form an effective inactive region. Then the first clamping portion 2212 is released, the positive electrode plate 1121 continues to move, and the clamping mechanism 2210 is reset.

A distance between the two clamping mechanisms 2210 corresponds to a length of a tape feeder between the two bending regions on the innermost turn of the positive electrode plate 1121 of the electrode assembly 112, and two inactive regions 1127 can be formed simultaneously when the positive electrode plate 1121 passes by the inactivation apparatus 2200. The second clamping portion 2213 and the entire inactivation apparatus 2200 have corrosion resistance, ensuring a long service life.

The use method of the winding device 2000 in the embodiments of this application is as follows:
the winding apparatus rotates in a second direction M, and the first separator 1123 and the second separator 1124 are stacked and enter the winding apparatus 2100;
after the first separator 1123 and the second separator 1124 are wound at least one turn, the negative electrode plate 1122 is inserted between the first separator 1123 and the second separator 1124 to enter the winding apparatus 2100;
after the negative electrode plate 1122 is wound at least one turn, the positive electrode plate 1121 is conveyed along the first direction Q and passes by the inactivation apparatus 2200, the inactivation apparatus 2200 detects the position information of the positive electrode plate 1121, the clamping mechanism 2210 accurately clamps the positive electrode plate 1121 when the preset inactive region position passes through the clamping mechanism 2210, the first clamping portion 2212 provides acidic substance to the surface of the positive electrode plate 1121, and the clamping mechanism 2210 synchronously moves with the positive electrode plate 1121 for some time, so as to form two inactive regions 1127 on the inner side of the positive electrode plate 1121; and
the clamping mechanism 2210 releases the positive electrode plate 1121, the positive electrode plate 1121 continues to move along the first direction Q and is inserted into a side of the second separator 1124 facing the winding apparatus 2100, and the winding apparatus 2100 continues winding to form the electrode assembly 112.

In the electrode assembly 112 manufactured using the winding device 2000 and the manufacturing method of electrode assembly, the two bending regions 11217 on the innermost turn of the positive electrode plate 1121 each have one inactive region 1127 on the inner surface. This can reduce the CB value between the two bending regions 11217 on the innermost turn of the positive electrode plate 1121 and the negative electrode plate 1122 on its inner side, and alleviate the lithium precipitation phenomenon at that position, thereby improving the safety performance of the electrode assembly 112. In addition, the winding device 2000 and the manufacturing method allow for industrialized production of the electrode assembly 112, improving the manufacturing efficiency of the electrode assembly 112.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode assembly, comprising a positive electrode plate, wherein a bending region is formed after the positive electrode plate is wound; and
the positive electrode plate comprises a positive electrode current collector and a positive electrode active substance layer disposed on a surface of the positive electrode current collector, wherein the positive electrode active substance layer comprises an inactive region, and at least part of the inactive region is located in the bending region.

2. The electrode assembly according to claim 1, wherein the positive electrode current collector comprises an inner side surface facing an axis of the electrode assembly and an outer side surface facing away from the axis of the electrode assembly, and the positive electrode active substance layer comprises a first positive electrode active substance layer disposed on the inner side surface of the positive electrode current collector and a second positive electrode active substance layer disposed on the outer side surface of the positive electrode current collector, the first positive electrode active substance layer comprising the inactive region.

3. The electrode assembly according to claim 1 or 2, wherein the inactive region is located at the innermost turn of the positive electrode plate of the electrode assembly.

4. The electrode assembly according to any one of claims 1 to 3, wherein the inactive region is provided in a quantity of at least two, and the at least two inactive regions are spaced apart in a winding direction.

5. A battery cell, comprising the electrode assembly according to any one of claims 1 to 4.

6. A battery, comprising the battery cell according to claim 5.

7. An electric apparatus, comprising the battery according to claim 6, wherein the battery is configured to supply electric energy.

8. A winding device, comprising:
a winding apparatus configured to wind a positive electrode plate; and
an inactivation apparatus, wherein the inactivation apparatus is disposed upstream of the winding apparatus along a conveying direction of the positive electrode plate, and the inactivation apparatus is configured to provide an inactivating agent to the positive electrode plate to inactivate a positive electrode active substance at part of the positive electrode active substance layer of the positive electrode plate.

9. The winding device according to claim 8, wherein the inactivation apparatus is configured to provide the inactivating agent to a side of the positive electrode plate facing the winding apparatus.

10. The winding device according to claim 8 or 9, wherein the inactivation apparatus comprises:
a clamping mechanism configured to clamp the positive electrode plate and provide the inactivating agent to the positive electrode plate; and
a driving mechanism configured to drive the clamping mechanism to move synchronously with the positive electrode plate.

11. The winding device according to claim 10, wherein the clamping mechanism comprises:
a bracket;
a first clamping portion and a second clamping portion disposed on the bracket; and
a first driving member disposed on the bracket and configured to drive the first clamping portion and the second clamping portion to approach or move away from each other so as to clamp or release the positive electrode plate;
wherein at least one of the first clamping portion and the second clamping portion is configured to provide the inactivating agent to the positive electrode plate.

12. The winding device according to claim 11, wherein at least one of the first clamping portion and the second clamping portion is made of a porous material.

13. The winding device according to claim 11 or 12, wherein the driving mechanism comprises:
a lead screw disposed along the conveying direction of the positive electrode plate, wherein the lead screw runs through the bracket and is in threaded fit with the bracket; and
a second driving member configured to drive the lead screw to rotate so that the bracket moves along an axial direction of the lead screw.

14. The winding device according to any one of claims 10 to 13, wherein the inactivation apparatus comprises at least two clamping mechanisms spaced apart in the conveying direction of the positive electrode plate, and the driving mechanism is configured to drive the at least two clamping mechanisms to move synchronously.

15. The winding device according to any one of claims 10 to 14, wherein the inactivation apparatus further comprises:
a detection mechanism configured to detect position information of the positive electrode plate; and
a controller configured to control actions of the clamping mechanism and the driving mechanism based on the position information detected by the detection mechanism.

16. A manufacturing method of electrode assembly, comprising:
providing a positive electrode plate;
inactivating part of a positive electrode active substance layer of the positive electrode plate; and
winding the positive electrode plate.

17. The manufacturing method of electrode assembly according to claim 16, wherein the inactivating part of a positive electrode active substance layer of the positive electrode plate comprises:
providing an acidic solution to the positive electrode plate to inactivate part of the positive electrode active substance layer of the positive electrode plate.
